# EUROPÄISCHE PATENTSCHRIFT

(11) **EP 4 607 044 B1**
(45) Veröffentlichungstag und Bekanntmachung des Hinweises auf die Patenterteilung: **30.09.2026**
(21) Anmeldenummer: 24159738.4
(22) Anmeldetag: 26.02.2024
(51) Int. Cl.: F16B 15/00, F16B 5/06, E04B 1/26, F16B 2/00, F16B 5/00

(54) **VERBINDER FÜR ZWEI WERKSTÜCKE**
CONNECTOR FOR TWO WORKPIECES
CONNECTEUR POUR DEUX PIÈCES

(43) Veröffentlichungstag der Anmeldung: 27.08.2025
(60) Teilanmeldung: 26159628.2 / 4 722 546
(73) Patentinhaber: Knapp Holding GmbH, 3324 Euratsfeld (AT)
(72) Erfinder: KNAPP, Friedrich, 4362 Bad Kreuzen (AT)
(74) Vertreter: Weiser Voith Gugler Patentanwälte Partnerschaft

(56) Entgegenhaltungen:
- EP-A1- 3 985 189
- GB-A- 1 232 593
- US-A- 2 241 657

## Beschreibung

Die vorliegende Erfindung betrifft einen Verbinder zum Verbinden zweier Werkstücke aus im Vergleich zum Verbinder weicheren Werkstoffen, umfassend eine erste Verbinderplatte, welche eine Vorderseite zur Anlage an einem der Werkstücke, eine bei Anlage an dem einen Werkstück zugängliche Rückseite und eine oder mehrere Durchgangsbohrungen zum Verschrauben mit dem einen Werkstück hat, und eine zweite Verbinderplatte, welche eine Vorderseite zur Anlage am anderen der Werkstücke, eine bei Anlage an dem anderen Werkstück zugängliche Rückseite und eine oder mehrere Durchgangsbohrungen zum Verschrauben mit dem anderen Werkstück hat, wobei erste und zweite Verbinderplatte entweder miteinander einstückig ausgeführt sind oder eine Ankopplung zum Koppeln an die jeweils andere Verbinderplatte haben.

Verbinder der einstückigen Art werden entweder an zwei bereits in ihre gewünschte gegenseitige Lage verbrachte Werkstücke angelegt und darauf die erste Verbinderplatte mit dem einen und die zweite Verbinderplatte mit dem anderen Werkstück verschraubt, wobei die Rückseite beider Verbinderplatten jeweils zugänglich ist, oder die erste Verbinderplatte wird mit dem einen Werkstück von ihrer zugänglichen Rückseite her verschraubt, die beiden Werkstücke darauf in gewünschte gegenseitige Lage verbracht und darauf die zweite Verbinderplatte von ihrer zugänglichen Rückseite her mit dem anderen Werkstück verschraubt. Die Verbinderplatten können dabei verschieden ausgerichtet sein, d.h. in verschiedenen Ebenen liegen, wenn die Werkstücke nicht bündig aneinanderliegen, oder andernfalls der gesamte Verbinder eben sein, d.h. beide Verbinderplatten in ein und derselben Ebene liegen. Im Fall von miteinander koppelbaren ersten und zweiten Verbinderplatten, werden zunächst die erste Verbinderplatte mit dem einen und die zweite Verbinderplatte mit dem anderen Werkstück verschraubt, wobei beide Rückseiten zugänglich sind, und darauf die beiden Werkstücke in die gewünschte gegenseitige Lage verbracht und dabei die Verbinderplatten über die Ankopplung aneinander gekoppelt.

Verbinder der zweitgenannten Art sind beispielsweise aus der EP 1 856 417 B1, der EP 3 456 892 A1 oder der EP 3 985 189 A1 bekannt und Verbinder beider Arten werden von der Firma Knapp GmbH, Euratsfeld, Österreich, vertrieben. Sie eignen sich besonders zum Aufbau von Verbindungen im Hausbau oder im Ingenieurholzbau, auch für Schwerlastverbindungen, beispielsweise zum Verbinden von Haupt-, Neben- oder Querträgern, Querzügen, Bindern, Stützen, Pfosten, Wänden, Fassaden, Wandelementen od.dgl. und für Werkstücke aus vielerlei Materialien, vor allem aus Holz, aber auch aus Kunststoffen, Verbundstoffen, oder sogar Mauerwerk.

Aus der GB 1 232 593 A ist ferner ein Verbinder bekannt, der beidseitig jeweils nagelförmige sowie dreieckige Spitzen zum schraubenlosen Verbinden zweier Werkteile aus Holz aufweist, wozu die Spitzen in beide Holzteile eingedrückt werden.

Im Wesentlichen tragen bei bekannten Verbindern die Schrauben, über welche die Verbinderplatten mit den jeweiligen Werkstücken verschraubt werden, die Last. Sie sind, wenn eines der Werkstücke über den Verbinder vom anderen Werkstück getragen werden soll, vorwiegend auf Abscherung belastet. Um die Tragkraft zu erhöhen, können z.B. die Anzahl, die Länge oder der Durchmesser der Schrauben oder die Fläche der Verbinderplatten erhöht werden; allerdings unterliegen all diese Parameter engen Grenzen, da eine Erhöhung der Anzahl der Schrauben oder ihrer Dicke zugleich die Werkstücke schwächt und ihre Länge oder die Fläche der Verbinderplatten bereits durch die Werkstückabmessungen begrenzt ist.

Die Erfindung setzt sich um Ziel, Verbinder der genannten Art in Bezug auf ihre Tragfähigkeit weiter zu verbessern, sodass sie bei gleichem Gewicht oder gleicher Baugröße dauerhaft größere Kräfte übertragen können.

Dieses Ziel wird mit einem Verbinder mit den Merkmalen des Anspruchs 1 erreicht, welcher sich dadurch auszeichnet, dass die Vorderseiten der ersten und zweiten Verbinderplatte jeweils mit mehreren 0,2 mm bis 2,5 mm vorspringenden Rippen oder Noppen versehen sind und die erste und/oder die zweite Verbinderplatte an ihren lateralen Randseiten jeweils eine oder mehrere hinterschnittene Ausnehmungen in Form von T-Nuten hat, und dass der Verbinder ferner zumindest ein Arretierungsstück mit gegenüberliegenden, mit den Ausnehmungen korrespondierenden Fortsätzen umfasst, welche Fortsätze zum Arretieren zweier nebeneinandergelegter erster oder zweiter Verbinderplatten in deren Ausnehmungen einsetzbar sind.

Durch die Schrauben, über welche die Verbinderplatten mit den jeweiligen Werkstücken verschraubt werden, werden die Verbinderplatten gegen das jeweilige Werkstück gepresst. Durch den Anpressdruck dringen die Rippen oder Noppen zumindest ein wenig in die Oberfläche der weicheren Werkstoffe der Werkstücke ein. Dadurch wird die Haftreibung der Verbinderplatten an den Werkstücken wesentlich erhöht, sodass die Scherkräfte auf die Schrauben deutlich reduziert sind. Versuche der Erfinder haben ergeben, dass dadurch die Tragfähigkeit der Verbinder je nach Werkstoff der Werkstücke und seiner Homogenität bei gleicher Größe um bis zu 40% erhöht wird. Die Verbinder können dauerhaft größere Kräfte übertragen und/oder haben geringere Baugröße. Die Versuche haben ferner ergeben, dass Rippen oder Noppen, welche zu wenig von der Vorderseite vorspringen, entscheidend geringere Vorteile bringen; aber auch zu weit vorspringende Rippen oder Noppen führen zu einer verringerten Tragfähigkeit des Verbinders, da dabei die Oberflächenstruktur der Werkstücke geschwächt wird, was wiederum die Haftreibung und die übertragbaren Kräfte verringert. Die gegeneinander arretierten nebeneinanderliegenden Verbinderplatten haben durch das/die Arretierungsstück/e definierte gegenseitige Lage, was die Montage erleichtert und in der Verwendung eine gleichmäßige Belastung beider nebeneinanderliegender Verbinderplatten sicherstellt.

Besonders günstig ist, wenn die Rippen oder Noppen 0,6 mm bis 2 mm, bevorzugt 1 mm bis 1,8 mm, vorspringen. Je nach Werkstoff der Werkstücke erhöht ein Vorspringen in diesen Ausmaßen die Haftreibung besonders effektiv und dauerhaft.

Die Versuche haben ferner einen Einfluss des Abstandes der Rippen oder Noppen voneinander auf die Haftreibung ergeben. Besonders vorteilhaft ist, wenn die Rippen oder Noppen voneinander 0,5 cm bis 2 cm, bevorzugt 0,8 cm bis 1,3 cm, beabstandet sind. Ist der Abstand zu groß, nimmt die Wirkung ab und sind auf der Vorderseite weniger Rippen oder Noppen anordenbar. Ist umgekehrt der Abstand zu gering, wird die Oberfläche der Werkstücke wiederum geschwächt, wodurch die Wirkung der Rippen oder Noppen ebenfalls abnimmt.

Die Rippen oder Noppen können im Querschnitt jede beliebige Form haben, z.B. rechteckig oder halbrund. Günstig ist, wenn die Rippen oder Noppen einen dreieckigen, bevorzugt einen sägezahnförmigen Querschnitt haben. Rippen oder Noppen dieser Form dringen leichter in die Oberfläche des jeweiligen Werkstücks ein, schwächen diese dabei weniger als andere Formen, sondern verdichten und festigen die umliegenden Oberflächenbereiche. Insgesamt führt dies zu einem gleichmäßigeren flächigen Anliegen der Vorderseiten der Verbinderplatten an dem jeweiligen Werkstück und zu einer besonders tragfähigen Verbindung. Dabei sind in der Ausführungsform mit genoppten Vorderseiten die Noppen jeder Verbinderplatte bevorzugt jeweils pyramiden- oder kegelförmig, um besonders leichtes Eindringen in die Oberflächen der Werkstücke und hohe Tragkräfte zu bewirken.

In der Ausführungsform mit gerippten Vorderseiten können die Rippen beliebigen Verlauf haben, z.B. wellenförmig oder im Zickzack; die Rippen können auch unterbrochen sein und/oder einander kreuzen. Vorteilhaft ist, wenn die Rippen geradlinig und zueinander parallel sind. Das vereinfacht die Herstellung und führt zu einer gleichmäßigen Kraftübertragung vom einen Werkstück über den Verbinder in das andere Werkstück.

Besonders günstig ist in dieser Variante, wenn die beiden Verbinderplatten rechteckig sind und die Rippen quer über die gesamte Breite der Vorderseiten verlaufen. Dadurch können die Verbinderplatten und der Verbinder einfach und materialsparend hergestellt, z.B. stranggepresst oder -gegossen, werden ohne den Schritt einer großflächig materialabtragenden Nachbearbeitung zum Herausarbeiten der Rippen. Ferner ist die Haftreibung der Vorderseiten der Verbinderplatten gegenüber den jeweiligen Werkstücken bei senkrechter Montage maximiert.

Besonders günstig ist, wenn im Fall, dass jede der beiden Verbinderplatten mehrere Durchgangsbohrungen hat, zumindest eine Durchgangsbohrung jeder Verbinderplatte schräg zu ihrer Vorderseite verläuft. Dies ermöglicht eine schräge Zugspannung und damit schräge Kraftübertragung in das jeweilige Werkstück und, insbesondere wenn zumindest eines der Werkstücke Stirnholz ist, eine wesentlich haltbarere, tragkräftigere Verschraubung mit diesem Werkstück.

In der Ausführungsform mit einstückigem Verbinder, d.h. dass die erste und zweite Verbinderplatte miteinander einstückig ausgeführt sind, können die beiden Verbinderplatten in gegeneinander geneigten, versetzten und/oder gedrehten Ebenen liegen. Auch können die Vorderseiten der beiden Verbinderplatten auf verschiedenen Seiten des Verbinder liegen. Günstig ist hingegen, wenn die erste und zweite Verbinderplatte einen ebenen Verbinder bilden, wobei die Vorderseiten auf ein und derselben Seite des Verbinders liegen. Dies ist einfach in der Herstellung und ermöglicht die Einsetzbarkeit eines derartigen Verbinders für eine Vielzahl von üblichen Werkstück-Verbindungen, bei welchen die Werkstücke bündig aneinander liegen.

In diesem Fall ist ferner günstig, wenn die zumindest eine schräg verlaufende Durchgangsbohrung der ersten Verbinderplatte eine gegenüber der zumindest einen schräg verlaufenden Durchgangsbohrung der zweiten Verbinderplatte gegenläufige Schräge hat. Auf diese Weise können erhöhte Zugkräfte zwischen den beiden Werkstücken übertragen werden.

In der Ausführungsform, in welcher der Verbinder zweiteilig ist, d.h. erste und zweite Verbinderplatte eine Ankopplung zum Koppeln an die jeweils andere Verbinderplatte haben, ist besonders vorteilhaft, wenn die Ankopplung jeweils an der ersten und zweiten Verbinderplatte zumindest einen parallel zu ihrer Vorderseite vorspringenden Absatz umfasst, hinter welchem vorderseitig eine Hinterschneidung gebildet ist, in welche der Absatz der jeweils anderen Verbinderplatte in Eingriff gebracht werden kann. Auf diese Weise können die Verbinderplatten zunächst einzeln mit dem jeweiligen Werkstück verschraubt, und diese darauf aneinander verankert werden, indem die Verbinderplatten mit ihren Absätzen und Hinterschneidungen aneinander in Eingriff gebracht werden.

Die Absätze können an jeder Stelle der Verbinderplatten vorspringen. In einer vorteilhaften Variante springt zumindest ein Absatz vom Rand, welcher die Vorderseite einer der Verbinderplatten mit ihrer Rückseite verbindet, vor. Ein Absatz am Rand und die vorderseitig dazu gebildete Hinterschneidung sind besonders einfach zugänglich, um dem Absatz der jeweils anderen Verbinderplatte in Eingriff zu bringen.

In einer günstigen Variante ist zumindest eine der Verbinderplatten in Seitenansicht hakenförmig und hat einen von ihrem Haken parallel zu ihrer Vorderseite vorspringenden Absatz, hinter welchem eine vorderseitige Hinterschneidung gebildet ist, in welche ein Absatz der jeweils anderen Verbinderplatte in Eingriff gebracht werden kann. Die zumindest eine Verbinderplatte kann dabei entweder ausschließlich den Absatz und die Hinterschneidung am Haken aufweisen oder diese als weiteren Absatz und weitere Hinterschneidung haben, wenn zusätzlich der Absatz und die Hinterschneidung an ihrem Rand ausgebildet sind. Durch die Hakenform können die Verbinderplatten, je nach Anordnung des Hakens, besonders einfach Haken an Haken oder platzsparend Rückseite an Rückseite aneinander gekoppelt werden und/oder im Zusammenwirken mit Absätzen am Rand eine besonders belastbare doppelte Ankopplung erzielt werden.

In einer vorteilhaften Variante ist der vom Haken vorspringende Absatz einer der Verbinderplatten von einer Durchgangsbohrung durchsetzt, und der vom Rand vorspringende Absatz der anderen Verbinderplatte hat an seinem Kamm eine querende Kerbe. In der mit dem jeweiligen Werkstück verschraubten Stellung nimmt die Schraube an der den Absatz durchdringenden Durchgangsbohrung über die Kerbe der anderen Verbinderplatte Querkräfte auf, d.h. Kräfte, die von der Schraube auf die Flanken der Kerbe, also parallel zur Vorderseite der Verbinderplatte und quer zur Richtung des Vorspringens des Absatzes wirken, und verhindern so einem Verschieben der beiden Verbinderplatten in dieser Richtung.

Bevorzugt haben beide Verbinderplatten gleiche Form. Dies vereinfacht die Handhabung, Herstellung und Lagerhaltung.

Günstig ist, wenn sich im Fall der geradlinig und parallel gerippten Vorderseiten die Absätze und Hinterschneidungen parallel zu den Rippen quer über die gesamte Breite der Verbinderplatten erstrecken. Dies führt nicht nur aufgrund der Nutzung der gesamten Verbinderplattenbreite zu einer besonders tragkräftigen Kopplung der beiden Verbinderplatten aneinander, sondern auch zu einer einfachen und materialsparenden Herstellung des Verbinders in einem Strangpress- oder -gussverfahren ohne großflächig materialabtragende Nachbearbeitung.

In einer günstigen Variante verlaufen die T-Nuten von der Vorder- zur Rückseite jeder Verbinderplatte.

Vorteilhaft ist dabei, wenn die Arretierungsstücke Schraublöcher haben, um in ihrer in die Ausnehmungen zweier nebeneinandergelegter Verbinderplatten eingesetzten Stellung mit dem jeweiligen Werkstück verschraubt zu werden. Dies erhöht die Tragkraft der Verbinderplatten durch zusätzliche Kraftübertragung auf das jeweilige Werkstück. Überdies können so die kleineren, einfacher zu hantierenden Arretierungsstücke zuerst mit dem jeweiligen Werkstück verschraubt werden und dienen als Schablone für die hernach mit dem Werkstück verschraubten Verbinderplatten, deren Lage somit im Voraus festgelegt ist.

Die Erfindung wird nachstehend anhand von in den beigeschlossenen Zeichnungen dargestellten Ausführungsbeispielen näher erläutert. In den Zeichnungen zeigen:
die Fig. 1a und 1b eine erste Variante eines Verbinders zur Illustration einiger Merkmale eines erfindungsgemäßen Verbinders für zwei Werkstücke in einem Längsschnitt (Fig. 1a) bzw. einer Perspektivansicht von schräg vorne (Fig. 1b);
Fig. 2 eine zu den Fig. 1a und 1b alternative Variante eines Verbinders wieder zur Illustration einiger Merkmale des erfindungsgemäßen Verbinders in seiner mit den beiden Werkstücken verschraubten Stellung in einem Längsschnitt;
die Fig. 3 und 4 jeweils eine Variante einer weiteren Ausführungsform eines Verbinders jeweils zur Illustration einiger Merkmale des erfindungsgemäßen Verbinders, jeweils in der mit den Werkstücken verschraubten Stellung in einem Längsschnitt;
die Fig. 5a bis 5c eine weitere Variante der Ausführungsform des Verbinders der Fig. 3 und 4 wieder zur Illustration einiger Merkmale des erfindungsgemäßen Verbinders, nämlich eine Verbinderplatte in Seitenansicht (Fig. 5a) und in einer Perspektivansicht von schräg hinten (Fig. 5b) und zwei aneinander gekoppelte Verbinderplatten in der Perspektivansicht von Fig. 5b (Fig. 5c);
Fig. 6 eine erfindungsgemäße Variante der Verbinderplatte der Fig. 5a und 5b in Rückansicht; und
die Fig. 7 bis 10 jeweils schematisch Varianten der Gestaltung der Vorderseiten der Verbinder der Fig. 1 bis 6, in Vorderansicht (Fig. 7a, 8a und 9a), Seitenansicht (Fig. 7b, 8b, 9b), bzw. ausschnittsweise in Seitenansicht (Fig. 10a bis 10c).

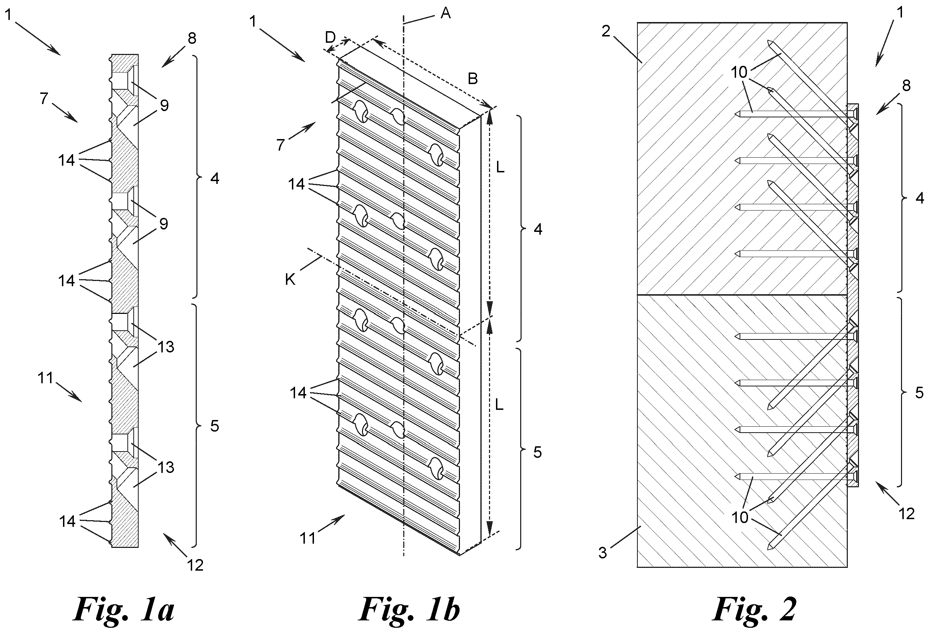

Die Fig. 1 bis 4 und 5c zeigen einen Verbinder 1 zum Verbinden zweier Werkstücke 2, 3. Die Werkstücke 2, 3 sind aus einem Werkstoff, welcher weicher ist als der Werkstoff des Verbinders 1. Die Werkstücke 2, 3 können beispielsweise aus Holz, insbesondere Brettschichtholz, aus Kunststoff, Verbundstoff, Mauerwerk od.dgl. sein. Es handelt sich dabei z.B. um Haupt-, Neben- oder Querträger, um Querzüge, Binder, Stützen, Pfosten, Wände, Fassaden, Wandelemente etc., welche mit Hilfe des Verbinders 1 verbunden werden. Der Verbinder 1 selbst kann ebenfalls aus verschiedenen Werkstoffen hergestellt sein, insbesondere aus Kunststoff oder Verbundstoff; meist wird er jedoch aus Metall, insbesondere aus Stahl oder Aluminium, z.B. hochfestem Aluminium, gefertigt.

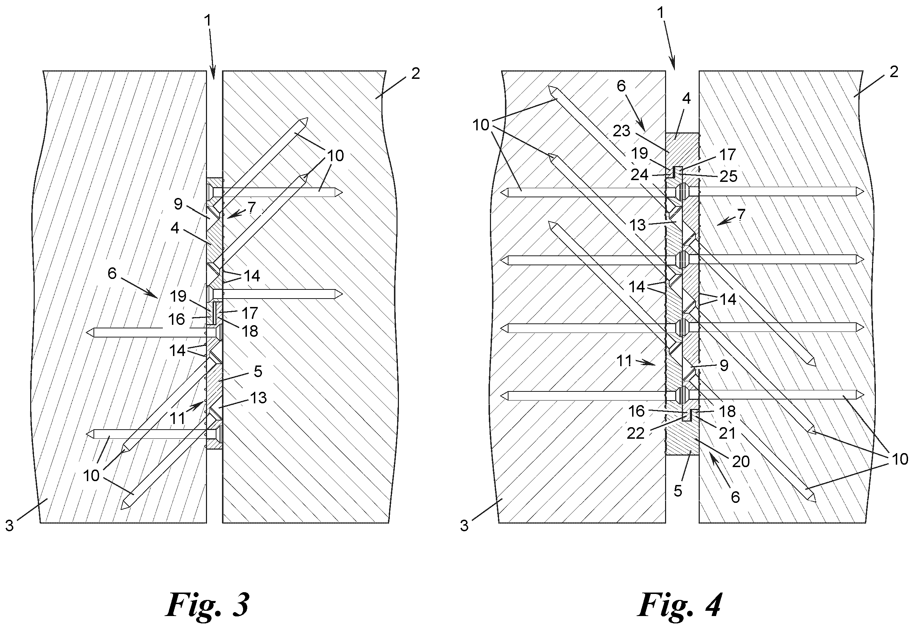

Der Verbinder 1 umfasst eine erste Verbinderplatte 4 und eine zweite Verbinderplatte 5. Im Beispiel der Fig. 1a, 1b und 2 ist der Verbinder 1 einstückig, d.h. die erste und zweite Verbinderplatte 4, 5 sind miteinander einstückig ausgeführt. In den Beispielen der Fig. 3 und 4 sind hingegen die beiden Verbinderplatten 4, 5 voneinander separat und haben eine Ankopplung 6, mit welcher eine Verbinderplatte 4, 5 an die jeweils andere Verbinderplatte 5, 4 gekoppelt wird, wie weiter unten ausführlicher beschrieben.

In allen Ausführungsvarianten hat die erste Verbinderplatte 4 eine Vorderseite 7, mit welcher sie an einem der Werkstücke 2, 3 (hier: dem Werkstück 2) zur Anlage gebracht werden kann, und eine Rückseite 8, welche bei Anlage der Vorderseite 7 an dem einen Werkstück 2 zugänglich ist. Ferner hat die erste Verbinderplatte 4 eine oder (wie hier) mehrere Durchgangsbohrungen 9 für Schrauben 10, mithilfe welcher sie von ihrer zugänglichen Rückseite 8 her mit dem einen Werkstück 2 verschraubt werden kann (Fig. 2 bis 4).

Ähnlich zu der ersten Verbinderplatte 4 hat auch die zweite Verbinderplatte 5 eine Vorderseite 11 zur Anlage am anderen der Werkstücke 2, 3 (hier: dem Werkstück 3), eine bei Anlage an dem anderen Werkstück 3 zugängliche Rückseite 12 und eine oder mehrere Durchgangsbohrungen 13 zum Verschrauben mit dem anderen Werkstück 3.

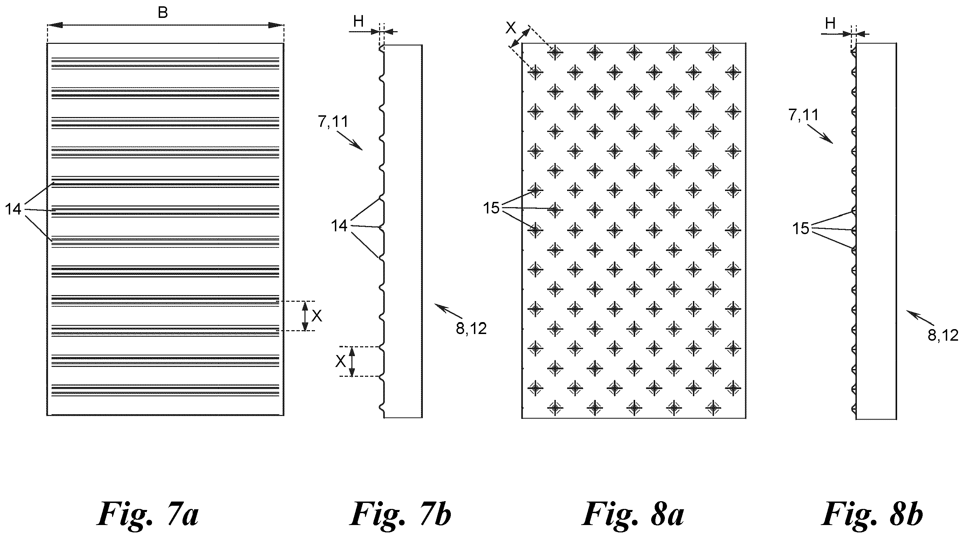

Die Vorderseiten 7, 11 der ersten und zweiten Verbinderplatte 4, 5 sind jeweils mit mehreren 0,2 mm bis 2,5 mm vorspringenden Rippen 14 oder Noppen 15 (Fig. 8a) versehen. Wenn die Vorderseiten 7, 11 mithilfe der Schrauben 10 mit den jeweiligen Werkstücken 2, 3 verschraubt werden, werden dadurch die Verbinderplatten 4, 5 gegen das jeweilige Werkstück 2, 3 gepresst. Durch den Anpressdruck dringen die Rippen 14 oder Noppen 15 in die Oberfläche des weicheren Werkstoffs der Werkstücke 2, 3 ein. Dies erhöht die Haftreibung der Verbinderplatten 4, 5 gegenüber den Werkstücken 2, 3 wesentlich, sodass bei Belastung auftretende Scherkräfte an den Schrauben 10 signifikant reduziert werden.

In den Beispielen der Fig. 1a, 1b und 2 liegen die erste und zweite Verbinderplatte 4, 5 in ein und derselben Ebene und bilden so einen ebenen Verbinder 1. In diesen Beispielen ist ein Übergang zwischen erster und zweiter Verbinderplatte 4, 5 nicht unmittelbar erkennbar. Jedoch könnte alternativ im Falle eines ebenen Verbinders 1 dieser in Frontansicht z.B. L-förmig oder T-förmig sein, wobei die erste Verbinderplatte 4 einen Schenkel des L oder T und die zweite Verbinderplatte 5 den anderen Schenkel des L oder T bildet, oder überhaupt beliebige andere Form haben, z.B. oval, rund, halbrund, rautenförmig etc.

Anstatt einen ebenen Verbinder 1 zu bilden, könnten die erste und zweite Verbinderplatte 4, 5 gegeneinander parallel versetzt, gegeneinander geneigt, d.h. der Verbinder 1 entlang der in Fig. 1b symbolisch dargestellten Knicklinie K geknickt, und/oder gedreht, d.h. der Verbinder 1 zwischen erster und zweiter Verbinderplatte 4, 5 um eine z.B. zentrale vertikale Achse A tordiert, sein. In den gezeigten Beispielen liegen ferner die Vorderseiten 7, 11 der beiden Verbinderplatten 4, 5 auf ein und derselben Seite des Verbinders 1; alternativ könnten Sie an gegenüberliegenden Seiten des Verbinders 1 liegen.

In den Beispielen der Fig. 1 bis 6 sind die beiden Verbinderplatten 4, 5 jeweils im Wesentlichen rechteckig mit einer Breite B, einer Länge L und einer aufgrund ihrer Plattenform im Vergleich zu Breite B und Länge L deutlich geringeren Dicke D. Die vorspringenden Rippen 14 können dabei wie gezeigt geradlinig oder z.B. wellenförmig, Zickzack-förmig etc. über die Vorderseiten 7, 11 der beiden Verbinderplatten 4, 5 verlaufen und dabei zueinander parallel oder schiefwinkelig sein oder einander kreuzen.

Zwar könnte jede Verbinderplatte 4, 5 mit Hilfe nur einer einzigen Schraube 10 mit dem jeweiligen Werkstück 2, 3 verschraubt werden; in den dargestellten Beispielen hat jedoch jede der beiden Verbinderplatten 4, 5 mehrere Durchgangsbohrungen 9, 13, von welchen optional zumindest eine Durchgangsbohrung 9, 13 jeder Verbinderplatte 4, 5 schräg zu ihrer Vorderseite 7, 11 verläuft. Im Beispiel der Fig. 1b durchsetzen die Durchgangsbohrungen 9, 13 entlang der zentralen Achse A die erste und zweite Verbinderplatte 4, 5 jeweils gerade, d.h. normal zur jeweiligen Vorderseite 7, 11 und die seitlich der Achse A angeordnete Durchgangsbohrungen 9, 13 durchsetzen die jeweilige Verbinderplatte 4, 5 schräg zu ihrer Vorderseite 7, 11. Dies ist jedoch nur eine von vielen möglichen Varianten der Anordnung und Ausrichtung der Durchgangsbohrungen 9, 13.

Im Beispiel der Fig. 2 hat die zumindest eine (hier: vier) schräg verlaufende Durchgangsbohrung(en) 9 der ersten Verbinderplatte 4 eine Schräge, welche gegenüber der zumindest einen (hier: vier) schräg verlaufenden Durchgangsbohrung(en) 13 der zweiten Verbinderplatte 5 gegenläufig ist, indem die schräg verlaufenden Durchgangsbohrungen 9 der ersten Verbinderplatte 4 in Richtung des ersten Werkstücks 2 nach oben und die Durchgangsbohrungen 13 der zweiten Verbinderplatte 5 in Richtung des anderen Werkstücks 3 nach unten ausgerichtet sind.

Die Fig. 3 bis 6 zeigen verschiedene Varianten jener Ausführungsform, in welcher der Verbinder 1 zwei separate, über die Ankopplung 6 miteinander gekoppelte Verbinderplatten 4, 5 hat, wodurch die beiden Werkstücke 2, 3 aneinander verankert bzw. verankerbar sind. Dazu werden zunächst die erste Verbinderplatte 4 mit dem einen Werkstück 2 und die zweite Verbinderplatte 5 mit dem anderen Werkstück 3 verschraubt und darauf die Verbinderplatten 4, 5 aneinander gekoppelt, um die beiden Werkstücke 2, 3 aneinander zu verankern. Die Ankopplung 6 umfasst jeweils an der ersten und zweiten Verbinderplatte 4, 5 zumindest einen Absatz 16, 17, welcher parallel zur Vorderseite 7, 11 der jeweiligen Verbinderplatte 4, 5 vorspringt und hinter welchem vorderseitig, d.h. aus Sicht des Absatzes 16, 17 in Richtung der jeweiligen Vorderseite 7, 11, jeweils eine Hinterschneidung 18, 19 gebildet ist. In die Hinterschneidung 18, 19 wird der Absatz 17, 16 der jeweils anderen Verbinderplatte 5, 4 in Eingriff gebracht, um diese aneinander zu koppeln.

Im Beispiel der Fig. 3 springt der Absatz 16, 17 vom Rand vor, welcher die Vorderseite 7, 11 der jeweiligen Verbinderplatte 4, 5 mit ihrer Rückseite 8, 12 verbindet. Der Absatz 16, 17 kann dabei rundum die jeweilige Verbinderplatte 4, 5 von ihrem rundumlaufenden Rand vorspringen; im Allgemeinen wird ein Absatz 16, 17 lediglich an einer Randseite der Verbinderplatte 4, 5 vorgesehen. Im gezeigten Beispiel springt der Absatz 17 an der Oberseite der hier unteren zweiten Verbinderplatte 5 parallel zu ihrer Vorderseite 11 in die Höhe vor und bildet vorderseitig die genannte Hinterschneidung 19. Der Absatz 17 hat dabei etwa die halbe Dicke D der zweiten Verbinderplatte 5 oder weniger und kann optional nach außen hin in seiner Dicke abnehmen.

Die erste Verbinderplatte 4 ist in diesem Beispiel gleich geformt wie die zweite Verbinderplatte 5, jedoch auf den Kopf gestellt, sodass ihr Absatz 16 hier an der Unterseite parallel zu ihrer Vorderseite 7 vorspringt und die vorderseitige Hinterschneidung 18 bildet. In der dargestellten in Eingriff befindlichen Stellung greifen die jeweiligen Absätze 17, 16 in die Hinterschneidungen 18, 19 der jeweils anderen Verbinderplatte 4, 5 ein. Dabei können sich die Absätze 16, 17 und Hinterschneidungen 18, 19 entweder quer über die gesamte oder nur über einen Teil der Breite B der Verbinderplatten 4, 5 erstrecken.

Es versteht sich, dass Absätze 16, 17 und Hinterschneidungen 18, 19 auch anders geformt und gebildet sein können. Beispielsweise könnten die Absätze 16, 17 an den Lateralseiten der Verbinderplatten 4, 5 gebildet sein, dies ist anhand der Darstellung des Verbinders 1 in Fig. 3 vorstellbar, wenn diese Ansicht als Draufsicht verstanden würde. Oder es könnte z.B. die untere (zweite) Verbinderplatte 5 an ihrer Oberseite eine in Frontansicht U- oder V-förmige Kerbe (nicht dargestellt) mit zur Vorderseite 11 parallelem Absatz 17 und vorderseitiger Hinterschneidung 19 und die obere (erste) Verbinderplatte 4 einen korrespondierenden, an ihrer Rückseite 8 abstehenden pilzförmigen Vorsprung haben, wobei der Kopf des Pilzes als Absatz 16 in die Hinterschneidung 19 der Kerbe eingreifen kann und zugleich die Hinterschneidung 18 für den Absatz 17 der zweiten Verbinderplatte 5 bildet. Die obere und untere Verbinderplatte 4, 5 könnten in diesem Fall auch vertauscht sein oder wieder beide Verbinderplatten 4, 5 gleich Form, d.h. jeweils sowohl eine U- oder V-Kerbe als auch einen pilzförmigen Vorsprung haben.

Fig. 4 zeigt eine weitere Variante der Verbinderplatten 4, 5 mit (hier: doppelter) Ankopplung 6. In dieser Variante ist die hier wieder untere zweite Verbinderplatte 5 in Seitenansicht (hier: im Längsschnitt dargestellt) hakenförmig und hat einen entsprechenden, von ihrem Haken 20 parallel zu ihrer Vorderseite 11 vorspringenden weiteren Absatz 21, hinter welchem eine weitere vorderseitige Hinterschneidung 22 gebildet ist. Weiterhin hat die zweite Verbinderplatte 5 an ihrer Oberseite den Absatz 17 mit Hinterschneidung 19, wie zuvor in Bezug auf Fig. 3 beschrieben. Die erste Verbinderplatte 4 ist wieder gleich geformt und auf den Kopf gestellt und hat somit an ihrem Haken 23 ebenfalls einen weiteren Absatz 24 und eine weitere Hinterschneidung 25. In der aneinander gekoppelten Stellung der beiden Verbinderplatten 4, 5 greift der weitere Absatz 24 der ersten Verbinderplatte 4 in die Hinterschneidung 19 an der Oberseite der zweiten Verbinderplatte 5 und umgekehrt der Absatz 17 der zweiten Verbinderplatte 5 in die weitere Hinterschneidung 25 der ersten Verbinderplatte 4 ein. Zugleich greift der weitere Absatz 21 der zweiten Verbinderplatte 5 in die Hinterschneidung 18 an der Unterseite der ersten Verbinderplatte 4 und umgekehrt der Absatz 16 der ersten Verbinderplatte 4 in die weitere Hinterschneidung 22 der zweiten Verbinderplatte 5 ein. Die beiden Verbinderplatten 4, 5 sind dadurch doppelt aneinander gekoppelt; ihre jeweiligen Rückseiten 8, 12 liegen aneinander an.

Alternativ könnten in dieser Variante, wenn keine doppelte Ankopplung gewünscht oder ist, jeweils die weiteren Absätze 21, 24 in die weiteren Hinterschneidungen 22, 25 in Eingriff gebracht werden und dabei die randseitigen Absätze 16, 17 und Hinterschneidungen 18, 19 optional entfallen. Ferner könnten die beiden Verbinderplatten 4, 5 unterschiedlich geformt sein und z.B. nur die obere erste Verbinderplatte 4 hakenförmig mit weiterem Absatz 24 und ohne randseitigen Absatz 16 und die untere zweite Verbinderplatte 5 nicht hakenförmig jedoch mit randseitigem Absatz 17 ausgeführt sein, oder umgekehrt.

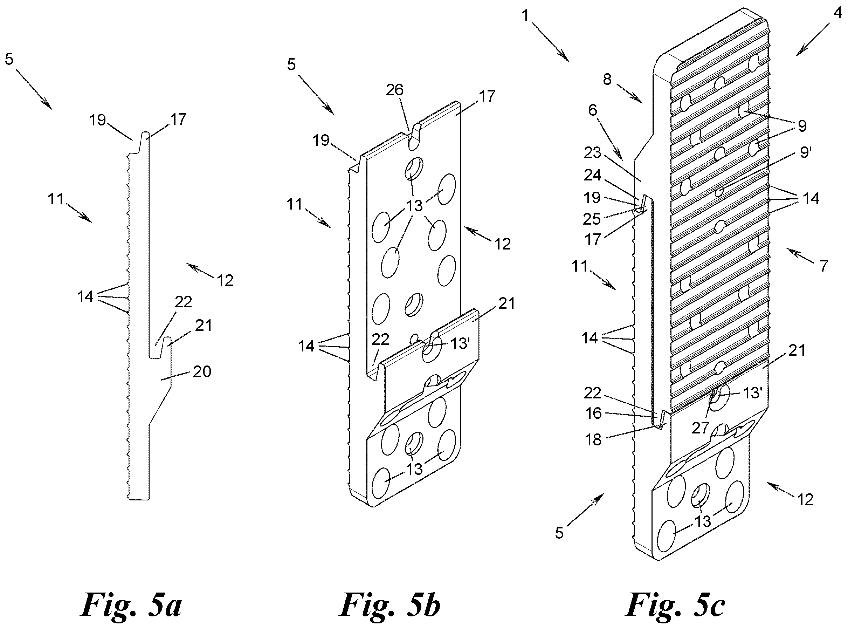

In einer weiteren Variante der Verbinderplatten 4, 5 Ankopplung 6 gemäß den Fig. 5a bis 5c ist die (hier wieder untere) zweite Verbinderplatte 5 ähnlich wie im Beispiel der Fig. 4 im Querschnitt hakenförmig, jedoch ist der Haken 20 in dieser Variante optional nicht an der Unterseite der Verbinderplatte 5 ausgebildet, sondern ein wenig von der Unterseite nach oben abgerückt. Wie im Beispiel der Fig. 4 hat die Verbinderplatte 5 einen vom Haken 20 parallel zu ihrer Vorderseite 11 vorspringenden weiteren Absatz 21, hinter welchem die weitere vorderseitige Hinterschneidung 22 gebildet ist, und an ihrer Oberseite den Absatz 17 mit Hinterschneidung 19. Wie in allen Beispielen hat die zweite Verbinderplatte 5 eine oder mehrere Durchgangsbohrungen 13, wobei in diesem Beispiel eine der Durchgangsbohrungen (mit dem Bezugszeichen 13' gekennzeichnet) den vom Haken 20 vorspringenden weiteren Absatz 21 (hier: zentral) durchdringt. Ferner hat die Verbinderplatte 5 an ihrem Absatz 17 an seinem Kamm eine querende Kerbe 26, d.h. eine den Absatz 17 von der Rückseite 12 zur Hinterschneidung 19 durchsetzende Kerbe 26 im Rand, wie im Folgenden erläutert.

Wie im Beispiel der Fig. 5c gezeigt, ist die (hier: obere) erste Verbinderplatte 4 dieses Beispiels optional wieder gleich geformt wie die zweite Verbinderplatte 5 und in der dargestellten Eingriffsstellung auf den Kopf gestellt. Wie zuvor anhand des Beispiels der Fig. 4 erläutert, sind optional die beiden Verbinderplatten 4, 5 doppelt aneinander gekoppelt; ihre Rückseiten 8, 12 liegen dabei teilweise aneinander an. Dabei korrespondiert die Kerbe 27 im (in der gezeigten Stellung nach unten gerichteten) Absatz 16 der ersten Verbinderplatte 4 mit der Durchgangsbohrung 13' der zweiten Verbinderplatte 5, sodass eine durch diese Durchgangsbohrung 13' eingedrehte Schraube 10 (nicht dargestellt) von den Flanken der Kerbe 27 des Absatzes 16 der ersten Verbindungsplatte 4 umgriffen wird. Dasselbe gilt sinngemäß für die in Fig. 5c nicht sichtbare Kerbe 26 der zweiten Verbinderplatte 5 und die (nicht dargestellte) Schraube in der Durchgangsbohrung 9' der ersten Verbindungsplatte 4. Auf diese Weise sichern die Schraube 10 in der Durchgangsbohrung 13' der zweiten Verbinderplatte 5 und jene in der gleichartigen Durchgangsbohrung 13' der ersten Verbinderplatte 4 die beiden Verbinderplatten 4, 5 und damit die Werkstücke 2, 3 gegen ein Verschieben in Richtung ihrer Breite B.

Es versteht sich, dass anstelle oder zusätzlich zu der einen Durchgangsbohrung 9', 13' für eine Schraube 10 jede Verbindungsplatte 4, 5 mehrere Durchgangsbohrungen 9', 13' und/oder eine oder mehrere die jeweilige weitere Hinterschneidung 22, 25 quer überspannende fixe Brücke aufweisen kann. Ferner könnte die Durchgangsbohrung 9', 13' alternativ am randseitigen Absatz 16, 17 und die Kerbe 26, 27 am weiteren, vom Haken 23, 20 vorspringenden Absatz 21, 24 ausgebildet sein.

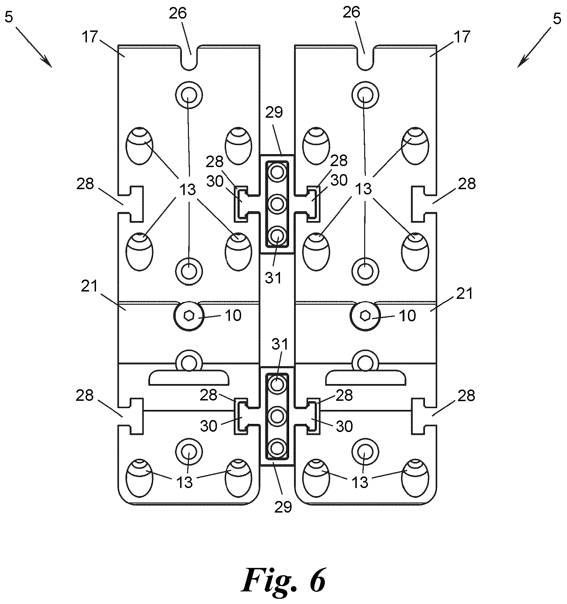

Fig. 6 zeigt ein Beispiel, in welchem jede (hier: zweite) Verbinderplatte 5 an ihrem Rand (hier: an jeder Lateralseite) eine oder mehrere (hier: zwei) hinterschnittene Ausnehmungen 28 hat. Die Ausnehmungen 28 sind jeweils T-förmige Nuten, die die zweite Verbinderplatte 5 von ihrer Vorder- zu ihrer Rückseite 11, 12 durchsetzen; alternativ können die Nuten nicht vollständig durchsetzend sein. Werden zwei Verbinderplatten 5 mit derartigen Ausnehmungen 28 nebeneinandergelegt, können diese mithilfe eines oder mehrerer (hier: zweier) Arretierungsstücke 29 gegeneinander arretiert werden. Jedes Arretierungsstück 29 hat dazu mit den Ausnehmungen 28 korrespondierende Fortsätze 30, welche in die Ausnehmungen 28 einsetzbar sind. Schließlich haben die Arretierungsstücke 29 optional Schraublöcher 31, um in ihrer in die Ausnehmungen 28 zweier nebeneinandergelegter Verbinderplatten 5 eingesetzten Stellung mit dem Werkstück 3 verschraubt zu werden. Auch an der ersten Verbinderplatte 4 können ähnliche Ausnehmungen für korrespondierende Arretierungsstücke vorgesehen werden (nicht dargestellt). Erfindungsgemäß haben die erste und/oder die zweite Verbinderplatte 4, 5 des Verbinders 1 Ausnehmungen 28 und Arretierungsstücke 29 solcher Art.

Für den Fachmann ist erkennbar, dass weitere Varianten - auch Kombinationen der gezeigten Beispiele - der Verbinderplatten 4, 5 möglich sind. Insbesondere können wie erwähnt die erste und zweite Verbinderplatte 4, 5 voneinander verschieden geformt sein.

In dem Beispielen der Fig. 7 bis 10 sind verschiedene Varianten der Rippen 14 und Noppen 15 symbolisch ohne jegliche Durchgangsbohrung 9, 13 und ohne Unterscheidung zwischen erster und zweiter Verbindungsplatte 4, 5 dargestellt; diese sind lediglich beispielhaft zu verstehen und nicht einschränkend. Wie weiter oben erläutert, springen die Rippen 14 oder Noppen 15 0,2 mm bis 2,5 mm von den Vorderseiten 7, 11 der Verbinderplatten 4, 5 vor, d.h. sie haben eine Höhe H von 0,2 mm bis 2,5 mm gegenüber der Vorderseite 7, 11 der jeweiligen Verbinderplatte 4, 5. Insbesondere können 0,6 mm bis 2 mm, bevorzugt 1 mm - 1,8 mm vorspringen, z.B. 1,2 mm oder 1,5 mm etc. Wie weit die Rippen 14 oder Noppen 15 von den Vorderseiten 7, 11 der Verbinderplatten 4, 5 vorspringen, hängt insbesondere von der Härte und der Spröde der Werkstücke 2, 3 ab.

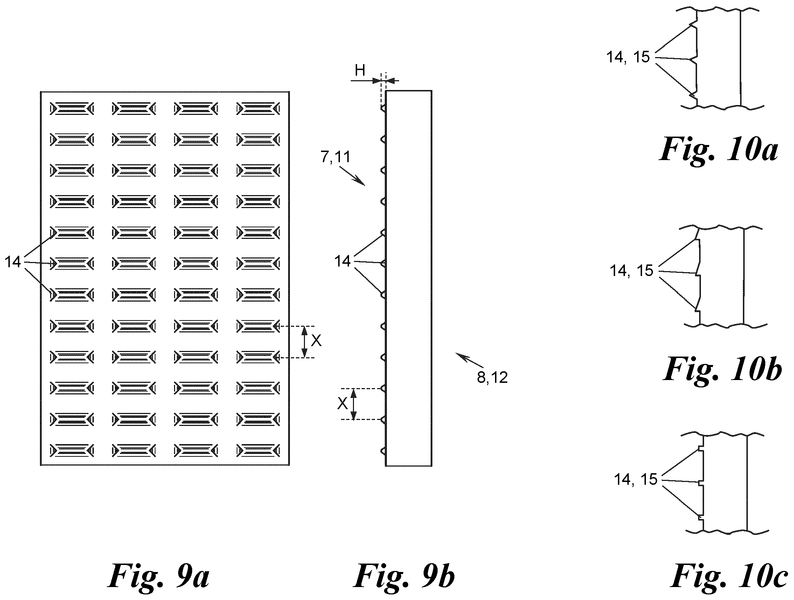

Die Rippen 14 können, wie in Fig. 1b gezeigt, quer über die gesamte Breite B oder, wie in Fig. 7a gezeigt, über einen Großteil der Breite B der Vorderseiten 7, 11 der Verbinderplatten 4, 5 verlaufen. Alternativ können die Rippen 14 nur über einen kleinen Teil der Breite B der Vorderseiten 7, 11 verlaufen und/oder, wie im Beispiel der Fig. 9a, unterbrochen sein. Ebenso können die Rippen 14 oder, wie im Beispiel der Fig. 8a, die Noppen 15 gleichmäßig über die Vorderseiten 7, 11 der ersten und zweiten Verbinderplatte 4, 5 verteilt sein oder alternativ nur an gewissen Stellen der Vorderseite 7, 11 liegen, z.B. rund um die Durchgangsbohrungen 9, 13 und/oder nahe der Ränder der Vorderseiten 7, 11. Ferner könnten an der Vorderseite 7, 11 ein und der derselben Verbinderplatte 4, 5 sowohl Rippen 14 als auch Noppen 15 ausgebildet sein.

In den dargestellten Beispielen sind die Rippen 14 oder Noppen 15 jedenfalls voneinander 0,5 cm bis 2 cm, bevorzugt 0,8 cm bis 1,3 cm, hier insbesondere in etwa 1 cm voneinander beabstandet. D.h. die Spitzen der Rippen 14 oder Noppen 15 haben von benachbarten Rippen 14 bzw. Noppen 15 einen Abstand X der genannten Größe.

Der Querschnitt der Rippen 14 oder Noppen 15 kann jeweils halbrund bzw. halboval sein; im Beispiel der Fig. 10a ist der Querschnitt hingegen dreieckig und im Beispiel der Fig. 10b insbesondere sägezahnförmig. Alternativ können die Rippen 14 oder Noppen 15 auch beispielsweise, wie in Fig. 10c dargestellt, rechteckigen oder aber einen anderen Querschnitt haben. Die Noppen 15 können z.B. kuppel- oder kegelförmig oder, wie in den Fig. 8a und 8b dargestellt, pyramidenförmig sein. Ferner können die Spitzen der Noppen 15 oder die Grate der Rippen 14 entweder scharfkantig oder, wie in den Beispielen der Fig. 7b, 8b und 9b dargestellt, abgerundet sein.

Die Erfindung ist nicht auf die dargestellten Ausführungsformen beschränkt, sondern umfasst alle Varianten, Modifikationen und deren Kombination, die in den Rahmen der angeschlossenen Ansprüche fallen.

## Patentansprüche

1. Verbinder zum Verbinden zweier Werkstücke (2, 3) aus im Vergleich zum Verbinder (1) weicheren Werkstoffen, umfassend
eine erste Verbinderplatte (4), welche eine Vorderseite (7) zur Anlage an einem der Werkstücke (2, 3), eine bei Anlage an dem einen Werkstück (2) zugängliche Rückseite (8) und eine oder mehrere Durchgangsbohrungen (9) zum Verschrauben mit dem einen Werkstück (2) hat, und
eine zweite Verbinderplatte (5), welche eine Vorderseite (11) zur Anlage am anderen der Werkstücke (2, 3), eine bei Anlage an dem anderen Werkstück (3) zugängliche Rückseite (12) und eine oder mehrere Durchgangsbohrungen (13) zum Verschrauben mit dem anderen Werkstück (3) hat,
wobei erste und zweite Verbinderplatte (4, 5) entweder miteinander einstückig ausgeführt sind oder eine Ankopplung (6) zum Koppeln an die jeweils andere Verbinderplatte (5, 4) haben,
**dadurch gekennzeichnet, dass**
die Vorderseiten (7, 11) der ersten und zweiten Verbinderplatte (4, 5) jeweils mit mehreren 0,2 mm bis 2,5 mm vorspringenden Rippen (14) oder Noppen (15) versehen sind und die erste und/oder die zweite Verbinderplatte (4, 5) an ihren lateralen Randseiten jeweils eine oder mehrere hinterschnittene Ausnehmungen (28) in Form von T-Nuten hat, und dass der Verbinder (1) ferner zumindest ein Arretierungsstück (29) mit gegenüberliegenden, mit den Ausnehmungen (28) korrespondierenden Fortsätzen (30) umfasst, welche Fortsätze (30) zum Arretieren zweier nebeneinandergelegter erster oder zweiter Verbinderplatten (4, 5) in deren Ausnehmungen (28) einsetzbar sind.

2. Verbinder nach Anspruch 1, **dadurch gekennzeichnet, dass** die Rippen (14) oder Noppen (15) 0,6 mm bis 2 mm, bevorzugt 1 mm bis 1,8 mm, vorspringen.

3. Verbinder nach Anspruch 1 oder 2, **dadurch gekennzeichnet, dass** die Rippen (14) oder Noppen (15) voneinander 0,5 cm bis 2 cm, bevorzugt 0,8 cm bis 1,3 cm, beabstandet sind.

4. Verbinder nach einem der Ansprüche 1 bis 3, **dadurch gekennzeichnet, dass** die Rippen (14) oder Noppen (15) einen dreieckigen, bevorzugt einen sägezahnförmigen Querschnitt haben.

5. Verbinder nach Anspruch 4, wobei die Vorderseiten (7, 11) mit Noppen (15) versehen sind, **dadurch gekennzeichnet, dass** die Noppen (15) pyramiden- oder kegelförmig sind.

6. Verbinder nach einem der Ansprüche 1 bis 4, wobei die Vorderseiten (7, 11) mit Rippen (14) versehen sind, **dadurch gekennzeichnet, dass** die Rippen (14) geradlinig und zueinander parallel sind.

7. Verbinder nach Anspruch 6, **dadurch gekennzeichnet, dass** die beiden Verbinderplatten (4, 5) rechteckig sind und die Rippen (14) quer über die gesamte Breite (B) der Vorderseiten (7, 11) verlaufen.

8. Verbinder nach einem der Ansprüche 1 bis 7, wobei jede der beiden Verbinderplatten (4, 5) mehrere Durchgangsbohrungen (9, 13) hat, **dadurch gekennzeichnet, dass** zumindest eine Durchgangsbohrung (9, 13) jeder Verbinderplatte (4, 5) schräg zu ihrer Vorderseite (7,11) verläuft.

9. Verbinder nach Anspruch 8, wobei die erste und zweite Verbinderplatte (4, 5) miteinander einstückig ausgeführt sind, **dadurch gekennzeichnet, dass** die erste und zweite Verbinderplatte (4, 5) einen ebenen Verbinder (1) bilden, wobei die Vorderseiten (7, 11) auf ein und derselben Seite des Verbinders (1) liegen.

10. Verbinder nach Anspruch 9, **dadurch gekennzeichnet, dass** die zumindest eine schräg verlaufende Durchgangsbohrung (9) der ersten Verbinderplatte (4) eine gegenüber der zumindest einen schräg verlaufenden Durchgangsbohrung (13) der zweiten Verbinderplatte (5) gegenläufige Schräge hat.

11. Verbinder nach einem der Ansprüche 1 bis 10, wobei erste und zweite Verbinderplatte (4, 5) die Ankopplung (6) zum Koppeln an die jeweils andere Verbinderplatte (5, 4) haben, **dadurch gekennzeichnet, dass** die Ankopplung (6) jeweils an der ersten und zweiten Verbinderplatte (4, 5) zumindest einen parallel zu ihrer Vorderseite (7, 11) vorspringenden Absatz (16, 24; 17, 21) umfasst, hinter welchem vorderseitig eine Hinterschneidung (18, 25; 19, 22) gebildet ist, in welche der Absatz (17, 21; 16, 24) der jeweils anderen Verbinderplatte (5, 4) in Eingriff gebracht werden kann.

12. Verbinder nach Anspruch 11, **dadurch gekennzeichnet, dass** zumindest ein Absatz (16, 17) vom Rand, welcher die Vorderseite (7, 11) einer der Verbinderplatten (4, 5) mit ihrer Rückseite (8, 12) verbindet, vorspringt.

13. Verbinder nach Anspruch 11 oder 12, **dadurch gekennzeichnet, dass** zumindest eine der Verbinderplatten (4, 5) in Seitenansicht hakenförmig ist und einen von ihrem Haken (23, 20) parallel zu ihrer Vorderseite (7, 11) vorspringenden Absatz (21, 24) hat, hinter welchem eine vorderseitige Hinterschneidung (22, 25) gebildet ist, in welche ein Absatz (17, 21; 16, 24) der jeweils anderen Verbinderplatte (5, 4) in Eingriff gebracht werden kann.

14. Verbinder nach Anspruch 13 in Verbindung mit Anspruch 12, **dadurch gekennzeichnet, dass** der vom Haken (23, 20) vorspringende Absatz (21, 24) einer der Verbinderplatten (4, 5) von einer Durchgangsbohrung (13', 9') durchsetzt ist und der vom Rand vorspringende Absatz (16, 17) der anderen Verbinderplatte (5, 4) an seinem Kamm eine querende Kerbe (27, 26) hat.

15. Verbinder nach einem der Ansprüche 11 bis 14, **dadurch gekennzeichnet, dass** beide Verbinderplatten (4, 5) gleiche Form haben.

16. Verbinder nach einem der Ansprüche 11 bis 15 in Verbindung mit Anspruch 7, **dadurch gekennzeichnet, dass** sich die Absätze (16, 24; 17, 21) und Hinterschneidungen (18, 25; 19, 22) parallel zu den Rippen (14) quer über die gesamte Breite (B) der Verbinderplatten (4, 5) erstrecken.

17. Verbinder nach einem der Ansprüche 1 bis 16, **dadurch gekennzeichnet, dass** die T-Nuten von der Vorder- zur Rückseite (7, 11; 8, 12) der jeweiligen Verbinderplatte (4, 5) verlaufen.

18. Verbinder nach einem der Ansprüche 1 bis 17, **dadurch gekennzeichnet, dass** die Arretierungsstücke (29) Schraublöcher (31) haben, um in ihrer in die Ausnehmungen (28) zweier nebeneinandergelegter Verbinderplatten (4, 5) eingesetzten Stellung mit dem jeweiligen Werkstück (2, 3) verschraubt zu werden.

## Claims

1. A connector for connecting two workpieces (2, 3) made of materials that are softer than the connector (1), comprising
a first connector plate (4) which has a front side (7) for bearing against one of the workpieces (2, 3), a rear side (8) that is accessible when the front side of the first connector plate bears against the one workpiece (2), and one or more through-holes (9) for screwing to the one workpiece (2); and
a second connector plate (5) which has a front side (11) for bearing against the other of the workpieces (2, 3), a rear side (12) that is accessible when the front side of the second connector plate bears against the other workpiece (3), and one or more through-holes (13) for screwing to the other workpiece (3),
wherein the first and second connector plates (4, 5) either are formed in one piece with one another or have a coupling (6) for coupling to the respective other connector plate (5, 4),
**characterised in that**
the front sides (7, 11) of the first and second connector plates (4, 5) are each provided with a plurality of ribs (14) or knobs (15) projecting by 0.2 mm to 2.5 mm and the first and/or the second connector plate (4, 5) has one or more undercut recesses (28) in the form of T-grooves at each of its lateral edge sides, and **in that** the connector (1) further comprises at least one locking element (29) having opposing extensions (30) corresponding with the recesses (28), which extensions (30) can be inserted into the recesses (28) for locking two first or two second connector plates (4, 5) placed next to one another.

2. The connector according to claim 1, **characterised in that** the ribs (14) or knobs (15) project by 0.6 mm to 2 mm, preferably by 1 mm to 1.8 mm.

3. The connector according to claim 1 or 2, **characterised in that** the ribs (14) or knobs (15) are spaced apart from one another by 0.5 cm to 2 cm, preferably by 0.8 cm to 1.3 cm.

4. The connector according to any one of claims 1 to 3, **characterised in that** the ribs (14) or knobs (15) have a triangular, preferably a sawtooth-shaped, cross-section.

5. The connector according to claim 4, wherein the front sides (7, 11) are provided with knobs (15), **characterised in that** the knobs (15) are pyramidal or conical in shape.

6. The connector according to any one of claims 1 to 4, wherein the front sides (7, 11) are provided with ribs (14), **characterised in that** the ribs (14) are rectilinear and parallel to one another.

7. The connector according to claim 6, **characterised in that** the two connector plates (4, 5) are rectangular, and the ribs (14) extend transversely across the entire width (B) of the front sides (7, 11).

8. The connector according to any one of claims 1 to 7, wherein each of the two connector plates (4, 5) has a plurality of through-holes (9, 13), **characterised in that** at least one through-hole (9, 13) of each connector plate (4, 5) is inclined with respect to its front side (7, 11).

9. The connector according to claim 8, wherein the first and second connector plates (4, 5) are formed in one piece with one another, **characterised in that** the first and second connector plates (4, 5) form a planar connector (1), wherein the front sides (7, 11) are located on one and the same side of the connector (1).

10. The connector according to claim 9, **characterised in that** the at least one inclined through-hole (9) of the first connector plate (4) has an inclination opposite to that of the at least one inclined through-hole (13) of the second connector plate (5).

11. The connector according to any one of claims 1 to 10, wherein the first and second connector plates (4, 5) have the coupling (6) for coupling to the respective other connector plate (5, 4), **characterised in that** the coupling (6) comprises, on each of the first and second connector plates (4, 5), at least one shoulder (16, 24; 17, 21) projecting parallel to its front side (7, 11), behind which shoulder an undercut (18, 25; 19, 22) is formed on the front side, with which undercut the shoulder (17, 21; 16, 24) of the respective other connector plate (5, 4) can be brought into engagement.

12. The connector according to claim 11, **characterised in that** at least one shoulder (16, 17) projects from the edge which connects the front side (7, 11) of one of the connector plates (4, 5) with its rear side (8, 12).

13. The connector according to claim 11 or 12, **characterised in that** at least one of the connector plates (4, 5) is hook-shaped in side view and has a shoulder (21, 24) projecting from its hook (23, 20) parallel to its front side (7, 11), behind which shoulder an undercut (22, 25) on the front side is formed, with which undercut a shoulder (17, 21; 16, 24) of the respective other connector plate (5, 4) can be brought into engagement.

14. The connector according to claim 13 in combination with claim 12, **characterised in that** the shoulder (21, 24) projecting from the hook (23, 20) of one of the connector plates (4, 5) is traversed by a through-hole (13', 9') and the shoulder (16, 17) projecting from the edge of the other connector plate (5, 4) has a traversing notch (27, 26) at its crest.

15. The connector according to any one of claims 11 to 14, **characterised in that** both connector plates (4, 5) have the same shape.

16. The connector according to any one of claims 11 to 15 in combination with claim 7, **characterised in that** the shoulders (16, 24; 17, 21) and undercuts (18, 25; 19, 22) extend parallel to the ribs (14) transversely across the entire width (B) of the connector plates (4, 5).

17. The connector according to any one of claims 1 to 16, **characterised in that** the T-grooves extend from the front side (7, 11) to the rear side (8, 12) of the respective connector plate (4, 5).

18. The connector according to any one of claims 1 to 17, **characterised in that** the locking elements (29) have screw holes (31) for screwing to the respective workpiece (2, 3) in their position inserted into the recesses (28) of two connector plates (4, 5) placed next to one another.

## Revendications

1. Connecteur pour la connexion de deux pièces (2, 3) en matériaux plus tendre par rapport au connecteur (1), comprenant
une première plaque de connecteur (4) qui a un côté avant (7) pour l'appui sur une des pièces (2, 3), un côté arrière (8) accessible lors de l'appui du côté avant de la première plaque de connecteur sur l'une des pièces (2) et un ou plusieurs alésages traversants (9) pour le vissage avec l'une des pièces (2), et
une deuxième plaque de connecteur (5) qui a un côté avant (11) pour l'appui sur l'autre des pièces (2, 3), un côté arrière (12) accessible lors de l'appui du côté avant de la deuxième plaque de connecteur sur l'autre pièce (3) et un ou plusieurs alésages traversants (13) pour le vissage avec l'autre pièce (3),
où la première et la deuxième plaque de connecteur (4, 5) soit sont réalisées d'une seule pièce l'une avec l'autre, soit ont un accouplement (6) pour l'accouplement à l'autre plaque de connecteur (5, 4) respective,
**caractérisé en ce que**
les côtés avant (7, 11) de la première et de la deuxième plaque de connecteur (4, 5) sont pourvus respectivement de plusieurs nervures (14) ou boutons (15) faisant saillie de 0,2 mm à 2,5 mm et la première et/ou la deuxième plaque de connecteur (4, 5) a respectivement sur ses côtés de bord latéraux un ou plusieurs évidements contre-dépouillés (28) en forme de rainures en T, et **en ce que** le connecteur (1) comprend en outre au moins une pièce de verrouillage (29) avec des saillies opposées (30) correspondant aux évidements (28), lesquelles saillies (30) peuvent être insérées dans leurs évidements (28) pour le verrouillage de deux premières ou deux deuxièmes plaques de connecteur (4, 5) placées côte à côte.

2. Connecteur selon la revendication 1, **caractérisé en ce que** les nervures (14) ou boutons (15) font saillie de 0,6 mm à 2 mm, de préférence de 1 mm à 1,8 mm.

3. Connecteur selon la revendication 1 ou 2, **caractérisé en ce que** les nervures (14) ou boutons (15) sont espacés les uns des autres de 0,5 cm à 2 cm, de préférence de 0,8 cm à 1,3 cm.

4. Connecteur selon l'une quelconque des revendications 1 à 3, **caractérisé en ce que** les nervures (14) ou boutons (15) ont une section transversale triangulaire, de préférence en forme de dents de scie.

5. Connecteur selon la revendication 4, où les côtés avant (7, 11) sont pourvus de boutons (15), **caractérisé en ce que** les boutons (15) sont de forme pyramidale ou conique.

6. Connecteur selon l'une quelconque des revendications 1 à 4, où les côtés avant (7, 11) sont pourvus de nervures (14), **caractérisé en ce que** les nervures (14) sont rectilignes et parallèles les unes aux autres.

7. Connecteur selon la revendication 6, **caractérisé en ce que** les deux plaques de connecteur (4, 5) sont rectangulaires et les nervures (14) s'étendent transversalement sur toute la largeur (B) des côtés avant (7, 11).

8. Connecteur selon l'une quelconque des revendications 1 à 7, où chacune des deux plaques de connecteur (4, 5) a plusieurs alésages traversants (9, 13), **caractérisé en ce qu'**au moins un alésage traversant (9, 13) de chaque plaque de connecteur (4, 5) s'étend de manière inclinée par rapport à son côté avant (7, 11).

9. Connecteur selon la revendication 8, où la première et la deuxième plaque de connecteur (4, 5) sont réalisées d'une seule pièce l'une avec l'autre, **caractérisé en ce que** la première et la deuxième plaque de connecteur (4, 5) forment un connecteur (1) plan, où les côtés avant (7, 11) sont situés sur un seul et même côté du connecteur (1).

10. Connecteur selon la revendication 9, **caractérisé en ce que** l'au moins un alésage traversant (9) s'étendant de manière inclinée de la première plaque de connecteur (4) a une inclinaison opposée à l'au moins un alésage traversant (13) s'étendant de manière inclinée de la deuxième plaque de connecteur (5).

11. Connecteur selon l'une quelconque des revendications 1 à 10, où la première et la deuxième plaque de connecteur (4, 5) ont l'accouplement (6) pour l'accouplement à l'autre plaque de connecteur (5, 4) respective, **caractérisé en ce que** l'accouplement (6) comprend respectivement sur la première et la deuxième plaque de connecteur (4, 5) au moins un épaulement (16, 24 ; 17, 21) faisant saillie parallèlement à son côté avant (7, 11), derrière lequel épaulement une contre-dépouille (18, 25 ; 19, 22) est formée sur le côté avant, dans laquelle contre-dépouille l'épaulement (17, 21 ; 16, 24) de l'autre plaque de connecteur (5, 4) respective peut être amené en prise.

12. Connecteur selon la revendication 11, **caractérisé en ce qu'**au moins un épaulement (16, 17) fait saillie du bord qui relie le côté avant (7, 11) de l'une des plaques de connecteur (4, 5) à son côté arrière (8, 12).

13. Connecteur selon la revendication 11 ou 12, **caractérisé en ce qu'**au moins l'une des plaques de connecteur (4, 5) est en forme de crochet en vue latérale et a un épaulement (21, 24) faisant saillie de son crochet (23, 20) parallèlement à son côté avant (7, 11), derrière lequel épaulement une contre-dépouille (22, 25) est formée sur le côté avant, dans laquelle contre-dépouille un épaulement (17, 21 ; 16, 24) de l'autre plaque de connecteur (5, 4) respective peut être amené en prise.

14. Connecteur selon la revendication 13 en combinaison avec la revendication 12, **caractérisé en ce que** l'épaulement (21, 24) faisant saillie du crochet (23, 20) de l'une des plaques de connecteur (4, 5) est traversé par un alésage traversant (13', 9') et l'épaulement (16, 17) faisant saillie du bord de l'autre plaque de connecteur (5, 4) a sur son arête une encoche (27, 26) transversale.

15. Connecteur selon l'une quelconque des revendications 11 à 14, **caractérisé en ce que** les deux plaques de connecteur (4, 5) ont la même forme.

16. Connecteur selon l'une quelconque des revendications 11 à 15 en combinaison avec la revendication 7, **caractérisé en ce que** les épaulements (16, 24 ; 17, 21) et les contre-dépouilles (18, 25 ; 19, 22) s'étendent parallèlement aux nervures (14) transversalement sur toute la largeur (B) des plaques de connecteur (4, 5).

17. Connecteur selon l'une quelconque des revendications 1 à 16, **caractérisé en ce que** les rainures en T s'étendent du côté avant (7, 11) au côté arrière (8, 12) de la plaque de connecteur (4, 5) respective.

18. Connecteur selon l'une quelconque des revendications 1 à 17, **caractérisé en ce que** les pièces de verrouillage (29) ont des trous de vissage (31) pour être vissées avec la pièce (2, 3) respective dans leur position insérée dans les évidements (28) de deux plaques de connecteur (4, 5) placées côte à côte.
